# EUROPEAN PATENT SPECIFICATION

(11) **EP 4 077 824 B1**
(45) Date of publication and mention of the grant of the patent: **04.02.2026**
(21) Application number: 19835350.0
(22) Date of filing: 20.12.2019
(51) Int. Cl.: E04B 2/62, E04B 2/78, F16B 21/08

(54) **CLIP CONNECTOR FOR CONNECTING TWO STUDS**
CLIP-VERBINDER ZUM VERBINDEN ZWEIER BOLZEN
CONNECTEUR À PINCE POUR LA LIAISON DE DEUX POTEAUX

(43) Date of publication of application: 26.10.2022
(73) Proprietor: Knauf Gips KG, 97346 Iphofen (DE)
(72) Inventor: FESER, Gerald, 97737 Gemunden (DE); GÖTZ, Sebastian, 97199 Ochsenfurt (DE); HEß, Daniel, 97348 Rodelsee (DE); VIEBAHN, Michael, 97346 Iphofen (DE)
(86) International application number: PCT/EP2019/000355
(87) International publication number: WO 2021/121536

(56) References cited:
- US-A- 3 511 000
- US-A1- 2016 123 367

## Description

The invention relates to a clip connector for connecting two studs to each other, a construction and a method for connecting two studs according to the respective independent claim.

The technical field relates to constructions in particular inner or outer building constructions, like drywall constructions.

Such constructions, ceilings or walls can be formed by connecting a plurality of studs (e.g. drywall stud, metal profile, runner) to each other so as to form a stable grid-like construction element to which building panels can be applied to form a closed surface. In case of a ceiling or a large wall, it is known to use reinforcement studs made of a thick metal sheet, which allows for providing constructions with improved mechanical or static properties.

In particular, in case of ceilings the use of reinforcement studs as studs allows to form strong constructions with a wide span. In conventional constructions, the reinforcement studs are provided with perforations of many shapes like round holes or elongated recesses. It is known to increase the possible length (span) of a construction like a ceiling by connecting two studs in a longitudinally overlapping manner. The connection of the studs is carried out by use of screwed or bolted connection, usually with bolts, nuts and washers. A disadvantage related to those constructions is that it is very time consumptive to arranged two studs with the perforations on each other and connect the respective nut and bolt to each other. Another disadvantage relates to that tools are needed to fasten nut and bolt connections, i.e. open-end spanners or ratchets are needed which are not common for setting up drywall constructions. Further, consequently and in addition, a lot of (muscle) strength is required for these connections.

A widely used construction for example in case of a variable floor plan is the room-in-room system, which is commonly known in the market under the name KNAUF CUBO. Such a room-in-room system is made for several uses, like sanitary modules, sound insulated booths, meeting rooms, foreman's offices or the encapsulation of industrial machinery. In huge room-in-room constructions, the use of perforated reinforcement profiles is very common and wide spans are needed. In case of room-in-room constructions, the above described disadvantages relating to the time which is needed to set up the construction as well as the tools needed for connecting the reinforcement profiles by nut and bolt techniques are even more significant.

US 2016/123367 A1 discloses a clip connector according to the preamble of independent claim 1.

Hence, it is an object of the invention to provide a clip connector for connecting two studs, a construction and a method for connecting two studs which overcome or at least reduce the disadvantages apparent in the prior art.

To overcome or at least reduce the problems known in the prior art, the invention provides a clip connector for connecting two studs, a construction and a method for connecting two studs according to the respective independent claims. Preferred technical aspects form the subject matter of the dependent claims.

The invention comprises a clip connector according to independent claim 1 for connecting two studs to each other.

The clip connector comprises a head portion, a shank portion with a first end section and a second end section. The first end section is located at the head portion. Two resilient members have a first end located at the second end section of the shank portion and having a second end pointing towards the head portion wherein in the mounted state of the clip connector, the studs are arranged between the head portion and the second end of the at least one resilient member. By arranging the studs between the head portion and the second end of the resilient members a stable connection is achieved. The stable connection allows using this type of connector clip for a quick connection of reinforcement studs. This is particularly advantageous in room in room constructions or ceilings with a wide span.

According to a preferred technical aspect, the studs are drywall studs comprising a base portion (also called web) and (two) flanges. The studs can be made of a sheet metal or of a metal layer having a width (thickness) between 1 mm and 3 mm, preferably between 1.5 and 2.5 mm with the web having a width of 50 mm, 70 mm, 75 mm, 100 mm, 125 mm or 150 mm. It is particularly preferred that the drywall studs comprise perforations. The perforations can have a length between 3 cm and 5 cm, preferably between 3.5 cm and 4.5 cm and/or a width between 8.1 mm and 10.0 mm, preferably between 8.3 mm and 9.7 mm, more preferably between 8.7 mm and 9.3 mm. Perforations may be in the base portion and/or in the flanges, preferably in the base portion.

Advantageously, the shank portion is of a tapered shape so that the cross-section decreases towards the second end section. The size and form of the tapered shape can be chosen so that the second end section form fits in the perforation and the first end section is smaller so that a guiding is provided when pressing the shank into the perforation.

Preferably, the shank portion at the first end section has a thickness between 7 mm and 8.9 mm. Particularly preferred is the range between 7.9 mm and 8.8 mm, more preferably between 8.1 mm and 8.7 mm. Advantageously the distance between second end of the at least one resilient member and the head portion is at least the thickness of the studs arranged between the head portion and the second end. Preferably the resilience of the at least one resilient member is sufficient to bend without breaking when the shank portion of the clip connector is pushed through an opening of the size of a perforation.

Another advantageous aspect relates to that the shank portion and the head portion are arranged in a T-shape.

Preferably, the head portion has a rectangular shape. It is of particular advantage that the head portion is of a straight cross-section. This type of clip connector is easy as well as cheap to produce and requires not much force when the clip connector is pressed into the perforation. Advantageously, the head portion has a cross section with three adjacent sections. The adjacent sections can be of the same length and thickness and be arranged with an axis symmetry. The three adjacent sections can be arranged with an angle relative to each other or a curved cross-section with a curvature bent towards the shank portion to allow for increasing the clamping effect.

Preferably, the clip connector comprises plastic material or metal material, more preferably comprises plastic material, and most preferably consists of a plastic material which allows cost effective mass production. As metal material, e.g. spring steel is advantageous due to its flexible properties.

The two resilient members can be arranged with the shank portion between them. Preferably, the resilient members may be an axis-symmetric in relation to each other and/or the shank portion.

Another preferred aspect relates to that the distance of the two resilient members at their respective second end is between 9 mm and 20 mm. Particularly preferred the distance is between 9.2 mm and 15 mm. Additionally or alternatively, the distance of the two resilient members at their respective second end is bigger than the distance of the two resilient members at any point of the resilient members closer to first end than to the second end. However, in an embodiment with only one resilient member the distance between the second end of the resilient member and the shank portion is bigger than the distance of the shank portion to the resilient member at any point of the resilient members closer to first end of the resilient member.

The invention includes according to a further aspect a construction (drywall construction) comprising a first stud with perforations and a second stud with perforations and at least one, preferably at least two clip connectors according to the invention. The at least one clip connector is arranged in two at least partially overlapping perforations (usually one perforation per stud). The studs can be reinforcement studs in a room-in-room construction or a ceiling.

Preferably, the first stud with perforations and the second stud with perforations are arranged so that they partially or completely overlap in the longitudinal direction. That allows for increasing the overall (possible) length (span) of a construction like a ceiling, especially in a room-in-room construction.

Advantageously, the first and the second stud are drywall studs with perforations comprising a base portion and flanges, preferably wherein the perforations have a length between 3 cm and 5 cm, preferably between 3.5 cm and 4.5 cm and/or a width between 8.1 mm and 10.0 mm, preferably between 8.3 mm and 9.7 mm, more preferably between 8.7 mm and 9.3 mm. That dimensions are typical for reinforcement studs.

The clip connector as described herein is of particular advantage in this construction.

The invention includes according to a still further aspect a kit comprising at least two studs with perforations and at least two clip connectors as described herein. The advantage is that one is able to buy the complete ceiling construction in one pack and does not need to think of which screws, nuts and washers to buy.

The invention includes according to a still further aspect a method for connecting two studs with at least one (preferably at least two) clip connectors as described herein. The at least one (preferably at least two) shank portions of the clip connector are pushed through two perforations of two drywall studs placed (substantially) on top of each other without further tools.

In the following drawings, the invention is illustrated in context of exemplary embodiments in which
- **Fig. 1**: shows a perspective view of a clip connector with a straight head portion;
- **Fig. 2a**: shows a side view of a clip connector with a curved head portion;
- **Fig. 2b**: shows a side view of a clip connector with a head portion having three angled sections;
- **Fig.3a**: shows a construction of the first and the second stud with the clip connector in a first position;
- **Fig. 3b**: shows a construction of the first and the second stud with the clip connector in a second position;
- **Fig.3c**: shows a construction of the first and the second stud with the clip connector in a third position; and
- **Fig. 4**: shows perspective view of a construction of the first and the second stud with the inserted clip connector.

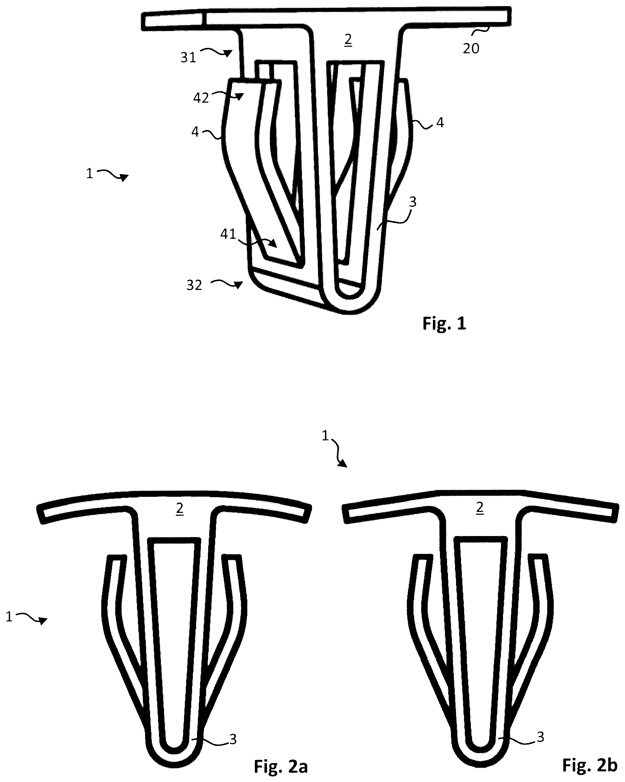

**Fig. 1** shows a perspective view of a clip connector 1 with a straight head portion 2.

Clip connector 1 is used for connecting two studs (not shown) to each other, wherein more than one clip connector 1 can additionally be used for such a connection.

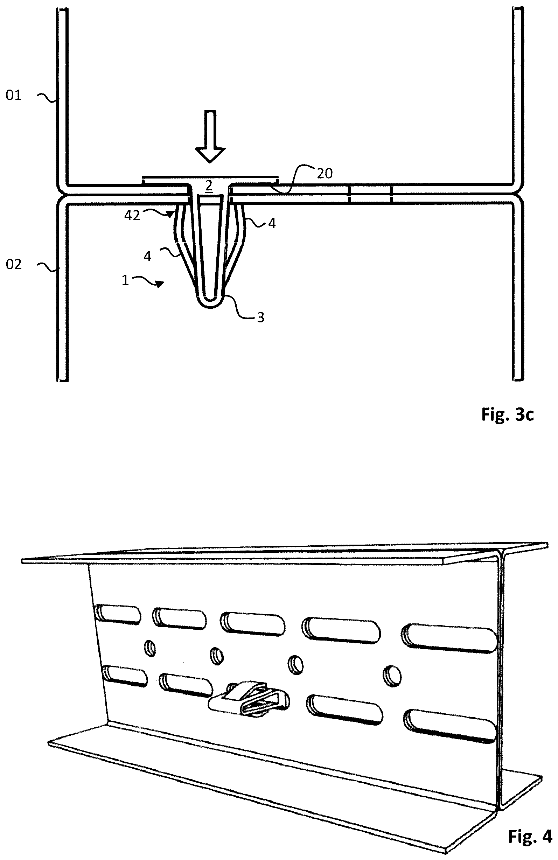

The clip connector 1 comprises a head portion 2. The lower surface of the head portion 2 is in contact with the stud in the installed state of the clip connector 1; see **Fig. 3c****.** A shank portion 3 is connected to the head portion 2 by a first end section 31 of the shank portion 3 being formed with the head portion 2, preferably in one piece of material. In principle, clip connector 1 comprises plastic material or metal material, more preferably consists of a plastic material. The head portion 2 has in the present example a width in the range of in between 9.1 mm to 30 mm. The head portion 2 is in the present example of a rectangular shape.

Shank portion 3 further comprises a second end section 32 with two resilient members 4. A first (lower) end 41 of each resilient member 4 is located at or near the (lower) second end section 32 of the shank portion 3. A second end 42 of each resilient member 4 points towards the head portion 2.

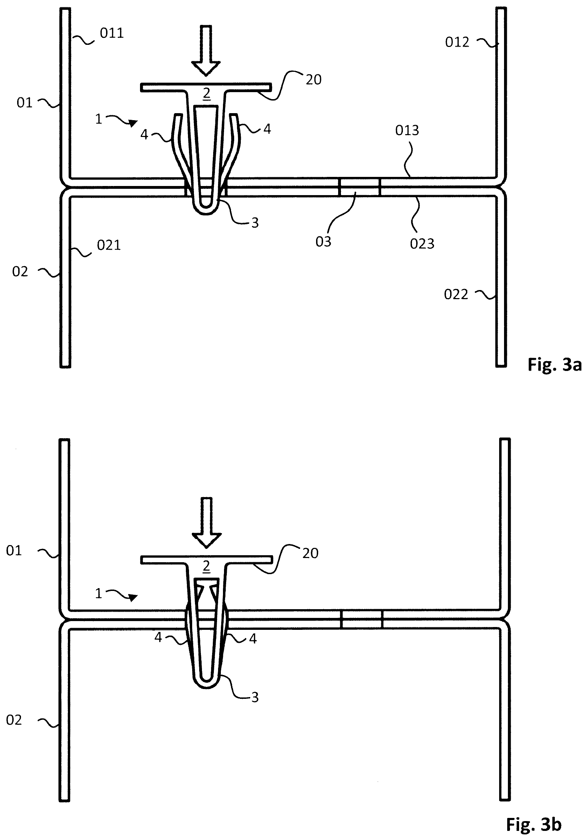

In the mounted state (see **Fig. 3c****)** of clip connector 1, studs are arranged between the head portion 2 and the second end 42 of each resilient member 4. Shank portion 3 is of a tapered shape so that the cross-section decreases towards the second end section 32. In the shown example, the shank portion 3 has at the first end section 31 a thickness between 7 mm and 8.9 mm (preferably between 7.9 mm and 8.8 mm, more preferably between 8.1 mm and 8.7 mm). Additionally or alternatively the distance between the second end 42 of the at least one resilient member 4 and the head portion 2 is at least the thickness of the studs (to be connected) arranged between the head portion and the second end 42 of the at least one resilient member 4 (see **Fig. 3c****).** Further additionally or alternatively the resilience of the at least one resilient member 4 is sufficient to bend without breaking when the shank portion 3 of the clip connector 1 is pushed through an opening of the size of a perforation 03 (see **Fig. 3a****)** or through the perforations of two studs.

The shank portion 3 and the head portion 2 are arranged in a T-shape. The head portion 2 has a straight cross-section with a flat lower surface 20.

Clip connector 1 comprises two resilient members 4 arranged so that the shank portion 3 is in between of them and being of an axis-symmetric shape in relation to each other. The distance of the two resilient members 4 at their respective second end 42 is between 9 mm and 20 mm (preferably between 9.2 mm and 15 mm). Additionally or alternatively, the distance of the two resilient members 4 at their respective second end 42 is bigger than the distance of the two resilient members 4 at any point of the resilient members closer to first end 41 than to the second end 42.

Two further aspects of the clip connector 1 are shown in **Fig. 2a** and **Fig. 2b****.** The clip connector 1 has a cross-section of the head portion 2 with three adjacent sections, which are arranged with an angle relative to each other or a curved cross-section with a curvature bent towards the shank portion 3. Both technical aspects allow for increasing the clamping effect of the installed clip connector 1 and stabilize the resulting construction.

The **Fig. 3a, Fig. 3b** and **Fig. 3c** are described together as they show different states for the insertion of a clip connector 1 in perforations 03 of two studs 01, 02 arranged on (top of) each other. An insertion includes one perforation 03 of the first stud 01 and one perforation 03 of the second stud 02.

The shown construction comprises a first stud 01 and a second stud 02 with a plurality of perforations 03. The first stud 01 and the second stud 02 are arranged with a base portion 013, 023 on (top of) each other so that the perforations 03 of the base portions 013 and 023 overlap. Two of the perforations 03 per base portion (on the left and on the right side of the base portions 013, 023) can be seen in this view, while in one of them (the left one) the insertion of a clip connector 1 is shown.

Studs 01, 02 are U-shaped drywall studs (e.g. reinforcement studs) comprising a base portion 013, 023 and flanges 011, 012, 021, 022. The perforations 03 have a length between 3 cm and 5 cm (preferably between 3.5 cm and 4.5 cm and/or a width between 8.1 mm and 10.0 mm, preferably between 8.3 mm and 9.7 mm, more preferably between 8.7 mm and 9.3 mm).

The clip connector 1 is inserted in the perforations 03 with the shank portion 3 and the resilient member 4 bend towards the shank portion 3 while the clip connector 1 is pressed into the perforation 03.

In the mounted state (Fig. 3c) of the clip connector 1, the studs 01, 02 are arranged between the head portion 2, i.e. the lower surface 20 of the head portion 2 and the second ends 42 of both resilient members 4. By arranging the studs 01, 02 between the lower surface 20 of the head portion 2 and and the second end 42 of the resilient member a stable connection is achieved. The stable connection allows using this type of connector clip 1 for a quick connection of reinforcement studs by arranging more than one clip connectors in the described manner. This is particularly advantageous in room-in-room constructions or ceilings with a wide span.

Fig. 4 is a perspective view from below at the construction of **Fig.** 3c. Especially preferred is an alternating mounting of the inventive clip connectors in the higher and lower row of the base portion 013, 023 of the studs 01 and 02. With this extra stability is achieved.

## Claims

1. Clip connector (1) for connecting two studs (01, 02) to each other, the clip connector (1) comprising a head portion (2), a shank portion (3) having a first end section (31) and a second end section (32), the first end section (31) being located at the head portion (2), and two resilient members (4) each having a first end (41) located at the second end section (32) of the shank portion (3) and having a second end (42) pointing towards the head portion (2), wherein in the mounted state of the clip connector (1), the studs (01, 02) are arranged between the head portion (2) and the second end (42) of the at least one resilient member (4), **characterized in that** the shank portion (3) forms a cavity, in which the resilient members (4) are partially accommodated during the installation process.

2. Clip connector (1) according to claim 1, wherein the shank portion (3) is of a tapered shape so that the cross-section decreases towards the second end section (32).

3. Clip connector (1) according to claim 1 or 2, wherein the shank portion (3) at the first end section (31) has a thickness between 7 mm and 8.9 mm, preferably between 7.9 mm and 8.8 mm, more preferably between 8.1 mm and 8.7 mm, and/or wherein the distance between the second end (42) of the at least one resilient member (4) and the head portion (2) is at least the thickness of the studs (01, 02) arranged between the head portion (2) and the second end (42), and/or wherein the resilience of the at least one resilient member (4) is sufficient to bend without breaking when the shank portion (3) of the clip connector (1) is pushed through an opening of the size of a perforation (03).

4. Clip connector (1) according to any one of the preceding claims, wherein the shank portion (3) and the head portion (2) are arranged in a T-shape.

5. Clip connector (1) according to any one of the preceding claims, wherein the head portion (2) has a straight cross-section, a cross-section with three adjacent sections, which are arranged with an angle relative to each other or a curved cross-section with a curvature bent towards the shank portion (3).

6. Clip connector (1) according to any one of the preceding claims, wherein the clip connector (1) comprises plastic material or metal material, preferably comprises plastic material, more preferably consists of plastic material.

7. Clip connector (1) according to any one of the preceding claims, wherein the clip connector (1) comprises two resilient members (4) being arranged with the shank portion (3) between them.

8. Clip connector (1) according to claim 7, wherein the distance of the two resilient members (4) at their respective second end (42) is between 9 mm and 20 mm, preferably between 9.2 mm and 15 mm, and/or the distance of the two resilient members (4) at their respective second end (42) is bigger than the distance of the two resilient members (4) at any point of the resilient members closer to first end (41) than to the second end (42).

9. Construction comprising a first stud (01) with perforations (03) and a second stud (02) with perforations (03) and at least one, preferably at least two clip connectors (1) according to any of the preceding claims, wherein the at least one clip connector (1) is arranged in two at least partially overlapping perforations (03).

10. Construction according to claim 9, wherein the first stud (01) with perforations (03) and the second stud (02) with perforations (03) are arranged to partially or completely overlap in the longitudinal direction.

11. Construction according to claim 9 or 10, wherein the first and the second stud (01, 02) are drywall studs with perforations (03) comprising a base portion (013, 023) and flanges (011, 012, 021, 022), preferably wherein the perforations (03) have a length between 3 cm and 5 cm, preferably between 3.5 cm and 4.5 cm and/or a width between 8.1 mm and 10.0 mm, preferably between 8.3 mm and 9.7 mm, more preferably between 8.7 mm and 9.3 mm.

12. Kit comprising at least two studs (01, 02) with perforations (03) and at least two clip connectors (1) according to any one of the claims 1 to 8.

13. Method for connecting two studs (01, 02) with at least one, preferably at least two, clip connectors (1) according to claims 1 to 8, wherein the at least one, preferably at least two, shank portions (3) of the clip connector (1) are pushed through two perforations (03) of two drywall studs (01, 02) placed substantially on top of each other without further tools.

## Patentansprüche

1. Clipverbinder (1) zum Verbinden zweier Ständer (01, 02) miteinander, wobei der Clipverbinder (1) einen Kopfabschnitt (2), einen Schenkelabschnitt (3) mit einem ersten Endabschnitt (31) und einem zweiten Endabschnitt (32), wobei der erste Endabschnitt (31) an dem Kopfabschnitt (2) angeordnet ist, und zwei federnde Elemente (4) umfasst, von denen jedes ein erstes Ende (41) an dem zweiten Endabschnitt (32) des Schenkelabschnitts (3) und ein zweites Ende (42) aufweist, das zum Kopfabschnitt (2) weist, wobei im montierten Zustand des Clipverbinders (1) die Ständer (01, 02) zwischen dem Kopfabschnitt (2) und dem zweiten Ende (42) des mindestens einen federnden Elements (4) angeordnet sind, **dadurch gekennzeichnet, dass** der Schenkelabschnitt (3) einen Hohlraum bildet, in dem die elastischen Elemente (4) während des Installationsvorgangs teilweise aufgenommen werden.

2. Clipverbinder (1) nach Anspruch 1, wobei der Schenkelabschnitt (3) eine konische Form aufweist, so dass der Querschnitt zu dem zweiten Endabschnitt (32) hin abnimmt.

3. Clipverbinder (1) nach Anspruch 1 oder 2, wobei der Schenkelabschnitt (3) an dem ersten Endabschnitt (31) eine Dicke zwischen 7 mm und 8,9 mm, vorzugsweise zwischen 7,9 mm und 8,8 mm, besonders bevorzugt zwischen 8,1 mm und 8,7 mm aufweist, und/oder wobei der Abstand zwischen dem zweiten Ende (42) des mindestens einen federnden Elements (4) und dem Kopfabschnitt (2) mindestens der Dicke der zwischen dem Kopfabschnitt (2) und dem zweiten Ende (42) angeordneten Ständer (01, 02) entspricht, und/oder wobei die Elastizität des mindestens einen federnden Elements (4) ausreicht, um sich zu biegen, ohne zu brechen, wenn der Schenkelabschnitt (3) des Clipverbinders (1) durch eine Öffnung in der Größe einer Perforation (03) geschoben wird.

4. Clipverbinder (1) nach einem der vorstehenden Ansprüche, wobei der Schenkelabschnitt (3) und der Kopfabschnitt (2) T-förmig angeordnet sind.

5. Clipverbinder (1) nach einem der vorstehenden Ansprüche, wobei der Kopfabschnitt (2) einen geraden Querschnitt, einen Querschnitt mit drei nebeneinander angeordneten Abschnitten, die in einem Winkel zueinander angeordnet sind, oder einen gekrümmten Querschnitt mit einer zu dem Schenkelabschnitt (3) hin gebogenen Krümmung aufweist.

6. Clipverbinder (1) nach einem der vorstehenden Ansprüche, wobei der Clipverbinder (1) Kunststoffmaterial oder Metallmaterial aufweist, vorzugsweise Kunststoffmaterial aufweist, besonders bevorzugt aus Kunststoffmaterial besteht.

7. Clipverbinder (1) nach einem der vorstehenden Ansprüche, wobei der Clipverbinder (1) zwei federnde Elemente (4) umfasst, zwischen denen der Schenkelabschnitt (3) angeordnet ist.

8. Clipverbinder (1) nach Anspruch 7, wobei der Abstand der zwei federnden Elemente (4) an ihrem jeweiligen zweiten Ende (42) zwischen 9 mm und 20 mm, vorzugsweise zwischen 9,2 mm und 15 mm beträgt und/oder der Abstand der zwei federnden Elemente (4) an ihrem jeweiligen zweiten Ende (42) größer ist als der Abstand der zwei federnden Elemente (4) an jeder Stelle der federnden Elemente, die näher an dem ersten Ende (41) als an dem zweiten Ende (42) liegt.

9. Konstruktion, umfassend einen ersten Ständer (01) mit Perforationen (03) und einen zweiten Ständer (02) mit Perforationen (03) und mindestens einen, vorzugsweise mindestens zwei Clipverbindern (1) nach einem der vorstehenden Ansprüche, wobei der mindestens eine Clipverbinder (1) in zwei sich zumindest teilweise überlappenden Perforationen (03) angeordnet ist.

10. Konstruktion nach Anspruch 9, wobei der erste Ständer (01) mit Perforationen (03) und der zweite Ständer (02) mit Perforationen (03) in Längsrichtung teilweise oder vollständig überlappend angeordnet sind.

11. Konstruktion nach Anspruch 9 oder 10, wobei der erste und der zweite Ständer (01, 02) Trockenbauständer mit Perforationen (03) sind, die einen Basisabschnitt (013, 023) und Flansche (011, 012, 021, 022) umfassen, wobei die Perforationen (03) vorzugsweise eine Länge zwischen 3 cm und 5 cm, vorzugsweise zwischen 3,5 cm und 4,5 cm und/oder eine Breite zwischen 8,1 mm und 10,0 mm, vorzugsweise zwischen 8,3 mm und 9,7 mm, besonders bevorzugt zwischen 8,7 mm und 9,3 mm aufweisen.

12. Satz, umfassend mindestens zwei Ständer (01, 02) mit Perforationen (03) und mindestens zwei Clipverbindern (1) nach einem der Ansprüche 1 bis 8.

13. Verfahren zum Verbinden zweier Ständer (01, 02) mit mindestens einem, vorzugsweise mindestens zwei, Clipverbindern (1) nach den Ansprüchen 1 bis 8, wobei der mindestens eine, vorzugsweise mindestens zwei, Schenkelabschnitte (3) des Clipverbinders (1) ohne weitere Werkzeuge durch zwei Perforationen (03) zweier im Wesentlichen übereinander liegender Trockenbauständer (01, 02) gesteckt werden.

## Revendications

1. Élément de liaison à clipser (1) permettant de relier deux montants (01, 02) l'un à l'autre, l'élément de liaison à clipser (1) comprenant une partie tête (2), une partie queue (3) ayant une première section d'extrémité (31) et une seconde section d'extrémité (32), la première section d'extrémité (31) étant localisée au niveau de la partie tête (2), et deux éléments élastiques (4) ayant chacun une première extrémité (41) localisée au niveau de la seconde section d'extrémité (32) de la partie queue (3) et ayant une seconde extrémité (42) pointant en direction de la partie tête (2), dans lequel dans l'état monté de l'élément de liaison à clipser (1), les montants (01, 02) sont agencés entre la partie tête (2) et la seconde extrémité (42) de l'au moins un élément élastique (4), **caractérisé en ce que** la partie queue (3) forme une cavité, dans laquelle les éléments élastiques (4) sont partiellement logés pendant le processus d'installation.

2. Élément de liaison à clipser (1) selon la revendication 1, dans lequel la partie queue (3) est d'une forme effilée de sorte que la section transversale diminue en direction de la seconde section d'extrémité (32).

3. Élément de liaison à clipser (1) selon la revendication 1 ou 2, dans lequel la partie queue (3) au niveau de la première section d'extrémité (31) a une épaisseur entre 7 mm et 8,9 mm, de préférence entre 7,9 mm et 8,8 mm, plus préférablement entre 8,1 mm et 8,7 mm, et/ou dans lequel la distance entre la seconde extrémité (42) de l'au moins un élément élastique (4) et la partie tête (2) vaut au moins l'épaisseur des montants (01, 02) agencés entre la partie tête (2) et la seconde extrémité (42), et/ou dans lequel l'élasticité de l'au moins un élément élastique (4) est suffisante pour plier sans casser lorsque la partie queue (3) de l'élément de liaison à clipser (1) est poussée à travers une ouverture de la taille d'une perforation (03).

4. Élément de liaison à clipser (1) selon l'une quelconque des revendications précédentes, dans lequel la partie queue (3) et la partie tête (2) sont agencées dans une forme de T.

5. Élément de liaison à clipser (1) selon l'une quelconque des revendications précédentes, dans lequel la partie tête (2) a une section transversale linéaire, une section transversale avec trois sections adjacentes, qui sont agencées avec un angle les unes par rapport aux autres ou une section transversale incurvée avec une courbure pliée en direction de la partie queue (3).

6. Élément de liaison à clipser (1) selon l'une quelconque des revendications précédentes, dans lequel l'élément de liaison à clipser (1) comprend un matériau en plastique ou un matériau métallique, comprend de préférence un matériau en plastique, plus préférablement est constitué de matériau en plastique.

7. Élément de liaison à clipser (1) selon l'une quelconque des revendications précédentes, dans lequel l'élément de liaison à clipser (1) comprend deux éléments élastiques (4) étant agencés avec la partie queue (3) entre eux.

8. Élément de liaison à clipser (1) selon la revendication 7, dans lequel la distance des deux éléments élastiques (4) au niveau de leur seconde extrémité (42) respective est comprise entre 9 mm et 20 mm, de préférence entre 9,2 mm et 15 mm, et/ou la distance des deux éléments élastiques (4) au niveau de leur seconde extrémité (42) respective est plus grande que la distance des deux éléments élastiques (4) au niveau de l'un quelconque point des éléments élastiques plus près de la première extrémité (41) que de la seconde extrémité (42).

9. Construction comprenant un premier montant (01) avec des perforations (03) et un second montant (02) avec des perforations (03) et au moins un, de préférence au moins deux éléments de liaison à clipser (1) selon l'une quelconque des revendications précédentes, dans laquelle l'au moins un élément de liaison à clipser (1) est agencé dans deux perforations (03) se chevauchant au moins partiellement.

10. Construction selon la revendication 9, dans laquelle le premier montant (01) avec perforations (03) et le second montant (02) avec perforations (03) sont agencés pour se chevaucher partiellement ou complètement dans la direction longitudinale.

11. Construction selon la revendication 9 ou 10, dans laquelle le premier et le second montant (01, 02) sont des montants de cloison sèche avec perforations (03) comprenant une partie de base (013, 023) et des rebords (011, 012, 021, 022), de préférence dans laquelle les perforations (03) ont une longueur entre 3 cm et 5 cm, de préférence entre 3,5 cm et 4,5 cm et/ou une largeur entre 8,1 mm et 10,0 mm, de préférence entre 8,3 mm et 9,7 mm, plus préférablement entre 8,7 mm et 9,3 mm.

12. Kit comprenant au moins deux montants (01, 02) avec perforations (03) et au moins deux éléments de liaison à clipser (1) selon l'une quelconque des revendications 1 à 8.

13. Procédé permettant de relier deux montants (01, 02) avec au moins un, de préférence au moins deux, éléments de liaison à clipser (1) selon les revendications 1 à 8, dans lequel l'au moins une, de préférence les au moins deux, parties queue (3) de l'élément de liaison à clipser (1) sont poussées à travers deux perforations (03) de deux montants (01, 02) de cloison sèche placés sensiblement l'un au-dessus de l'autre sans outils supplémentaires.
